# EUROPEAN PATENT APPLICATION

(11) **EP 4 079 477 A1**
(43) Date of publication of application: **26.10.2022**
(21) Application number: 22164537.7
(22) Date of filing: 25.03.2022
(51) Int. Cl.: B27C 5/02, B23D 47/04, B27B 5/065, B27C 5/06, B27M 1/08

(54) **METHOD FOR AUTOMATIC POSITIONING OF A PANEL IN THE ENTRY STATION OF A MACHINE FOR MACHINING PANELS IN WOOD AND THE LIKE**

(30) Priority: 20.04.2021 IT 202100010010
(71) Applicant: SCM Group S.p.A., 47921 Rimini (RN) (IT)
(72) Inventor: OLIVA, Stefano, 47921 RIMINI (IT); MANDOLESI, Stefano, 47921 RIMINI (IT)
(74) Representative: Cataldi, Silvia

(57) **Abstract**

The present invention relates to a method for automatic positioning of at least one panel (P) in the entry/exit station (3) of a machine (M) for machining panels (P) in wood, ceramic, glass, fiberglass, plastic, metal and the like, of the type comprising at least one loading device (D) of said at least one or more panels (P); wherein said entry/exit station (3) comprises at least one resting plane (21), which extends along a second axis (Y), on which said at least one loading device (D) places said at least one or more panels (P) to be machined; at least one machining unit (2) to perform a machining on said at least one or more panels (P), wherein said at least one machining unit (2) extends along a first axis (X), orthogonal to said second axis (Y), and comprises at least one machine tool movable along a cutting line (T) to perform a machining on said at least one or more panels (P) and at least one approaching member (23) movable along said first axis (X) and capable of contacting said at least one or more panels (P); and an abutting element (4) which extends along said second axis (Y); wherein said method comprises the following steps: 1. positioning, by said at least one loading device (D), said at least one or more panels (P) on said at least one resting plane (21); and 2. juxtaposing, by said at least one approaching member (23), said at least one or more panels (P) to said abutting element (4), in such a way to position said at least one or more panels (P) in a reference position.

## Description

The present invention relates to a method for automatic positioning of a panel in the entry station of a machine for machining panels in wood and the like.

### Field of the invention

More specifically, the invention relates to a method of the aforementioned type, studied and realized in particular for automatically positioning, for example by means of a robot or the like, a piece in an entry station in a machine for machining pieces made of wood in but also made of ceramic, glass, fiberglass, plastic, metal and the like, but which can be used for any machine for the machining of pieces in which it is necessary to place a piece in an entry station of a machine, before its machining.

In the following, the description will be directed to the machining of wooden panels in a cutting machine equipped with a robot, but it is clear that the same should not be considered limited to this specific use.

### Prior art

As is known, currently there exist machines for machining pieces such as, for example, wooden panels, comprising one or more machining stations arranged in series among each other to cut the pieces according to different directions.

These cutting machines, known in the jargon as "machines to cut", usually comprise a resting plane for the piece that develops along one direction, and a working station.

In particular, said known machines generally provide an entry or loading station for arranging, manually or automatically, the panels to be machined, and an exit or unloading station for picking up, manually or automatically, the panels machined by the machine.

Between said loading station and said unloading station it is arranged the working station, which comprises a cutting group, arranged below the working plane, and which comprises at least one blade that protrudes at least partially with respect to said working plane through a slot.

The transport between the two stations takes place through one or more clampers supported by one or more pusher groups.

In particular, each working station of the machine typically comprises a pressing member for blocking the panel in position during its machining, which takes place by means of said blade that cuts the piece along a cutting line, transversal with respect to the development direction of the resting plane.

The cutting takes place thanks to the movement of said cutting group along the cutting line.

Moreover, the blade is vertically movable between a resting position, in which it is arranged below said working plane, and a working position, in which it is arranged at least partially protruding with respect to said working plane.

Currently, as mentioned, the positioning of the piece to be machined in the entry station of the cutting machine can take place manually, by an operator, or automatically, by the aid of a robot or the like.

In the case of manual positioning, the operator moves the piece to be machined close to an abutting element, known in the jargon as "cut" and, subsequently, manually moves the same piece towards the clampers of the pusher groups. Therefore, the abutting element constitutes a reference for the piece, ensuring the correct positioning in the entry station, the correct removal by the clampers, and therefore the correct subsequent machining of the same piece.

However, typically the manual positioning of the piece to be machined is subjected to errors. In fact, the operator can erroneously position the piece in the entry station of the cutting machine, for example, by not approaching the piece to the abutting element or by approaching it only partially.

An incorrect approach of the piece with respect to the abutting element negatively affects the subsequent machining of the same piece, causing, for example, errors during the cutting operations of the piece.

In the case of automatic positioning of the piece to be machined, on the other hand, the piece is positioned in the entry station of the cutting machine by the aid of a robot or the like rather than by an operator.

The known solutions involve the presence of a robot and an additional abutting element comprising pins that can be extracted with respect to the resting plane of the machine, in which these extractable pins are arranged in correspondence with the abutting element of the cutting machine.

Therefore, these pins are able to protrude from the resting plane of the cutting machine, extending, in use, the abutting element of the same machine. Furthermore, the *robot* is equipped with one or more actuating devices, capable of moving the piece to be machined with respect to the additional abutting element, made by these extractable pins.

However, it is apparent that these known solutions are complex both by the structural and functional point of view as well as onerous in terms of manufacturing costs.

### Scope of the invention

In the light of the above, it is therefore a scope of the present invention to provide a method for positioning a piece in the entry station of a machine for machining wooden pieces and the like, which allows, in the case of automatic loading, to carry out a correct positioning of the piece by a robot or the like.

Another scope of the invention is that of providing a method of automatic positioning of a piece to be machined that allows minimizing or avoiding any delays in the subsequent working steps of the same piece to be machined.

Another scope of the invention is to provide a method of automatic positioning, which is highly reliable, relatively simple to manufacture, and at competitive costs if compared to the prior art.

A further scope of the present invention is to provide the tools necessary for carrying out the method and the apparatuses that carry out this method.

### Object of the invention

It is specific object of the present invention a method for automatic positioning of at least one panel in the entry/exit station of a machine for machining panels in wood, ceramic, glass, fiberglass, plastic, metal and the like, of the type comprising at least one loading device of said at least one or more panels; wherein said entry/exit station comprises at least one resting plane, which extends along a second axis, on which said at least one loading device places said at least one or more panels to be machined; at least one machining unit to perform a machining on said at least one or more panels, wherein said at least one machining unit extends along a first axis, orthogonal to said second axis, and comprises at least one machine tool movable along a cutting line to perform a machining on said at least one or more panels and at least one approaching member movable along said first axis and capable of contacting said at least one or more panels; and
an abutting element, which extends along said second axis; said method being characterized in that it comprises the following steps: 1. positioning, by said at least one loading device, said at least one or more panels on said at least one resting plane; and 2. juxtaposing, by said at least one approaching member, said at least one or more panels to said abutting element, in such a way to position said at least one or more panels in a reference position.

Advantageously according to the invention, said machine may also comprise at least one pusher group; wherein said at least one pusher group comprises one or more clamping and pushing elements to clamp and move along the direction of said second axis said at least one or more panels, on a supporting plane towards and away from said cutting line, and wherein each clamping and pushing element is capable of passing from an open configuration, in which each clamping and pushing element does not clamp said at least one or more panels, to a closed configuration, in which each clamping and pushing element clamps and holds said at least one or more panels to move it; said method being characterized in that it comprises, after said approaching step 2., the following further step: 3. moving said pusher group towards one extremity of said at least one or more panels in such a way that each clamping and pushing element of said pusher group, contacts said at least one or more panels in said open configuration.

Always according to the invention, said method may comprise, after said moving step 3., the following further steps: 4. moving each clamping and pushing element of said pusher group from said open configuration to said closed configuration; 5. moving said at least one approaching member away from said at least one or more panels; and 6. moving or holding said at least one panel towards/in said machining unit, by said each clamping and pushing element.

Still according to the invention, wherein said resting plane may be a loading/unloading plane and, during the machining, said at least one or more panels is resting partially on said resting plane, wherein said approaching step 2. may comprise the following sub-step: 2.1
lowering said at least one approaching member along a third axis vertical and orthogonal to said first axis, from a resting position, in which said at least one approaching member is lifted with respect to said resting plane, to an intermediate position, in which said at least one approaching member is lowered with respect to said resting plane and does not contact said at least one or more panels.

Conveniently according to the invention, said approaching step 2. may comprise, after the lowering sub-step 2.1, the following sub-step: 2.2 moving said at least one approaching member along said first axis from said intermediate position to a working position, in which said at least one approaching member moves said at least one or more panels to be machined, in such a way to juxtapose said at least one or more panels to said abutting element.

Still according to the invention, said moving away step 5. may comprise the following sub-step: 5.1 moving back said at least one approaching member along said first axis from said working position to said intermediate position, wherein said at least one approaching member is resting on said resting plane and does not contact said at least one or more panels.

Always according to the invention, said moving away step 5. may comprise, after said moving back sub-step 5.1, the following sub-step: 5.2 lifting said at least one approaching member along said third axis from said intermediate position to said resting position, wherein said at least one approaching member is lifted with respect to said resting plane.

Advantageously according to the invention, in said approaching step 2., one or more panels may be juxtaposed, by said at least one approaching member, to said first juxtaposed panel, in such a way to place said one or more panels next to each other, in predetermined reference positions with respect to said first juxtaposed panel.

Always according to the invention, said method may comprise, after said moving step 6., the following further step: 7. exchanging working data of said machine with one or more mobile electronic devices and/or a cloud infrastructure.

Still according to the invention, said positioning step 1. of said at least one or more panels on said supporting plane may be performed by an anthropomorphic or Cartesian robot.

### Brief description of the figures

The present invention will be now described, for illustrative but not limitative purposes, according to its preferred embodiments, with particular reference to the figures of the enclosed drawings, wherein:
figure 1 shows a top view of a machine for the machining wooden pieces and the like, in which an embodiment of the automatic positioning method, according to the present invention, is implemented;
figure 2 shows a schematic top view of the machine of figure 1 in an automatic loading configuration, in which the piece to be machined is arranged at the entry station of the machine, and is not approached to the abutting element of the machine;
figure 3 shows a further schematic top view of the machine of figure 1 in automatic loading configuration, in which the piece to be machined is arranged at the entry station of the machine and is approached to the abutting element of the machine, according to the present invention;
figure 4A shows a perspective view of a machining unit of the machine of figure 1;
figure 4B shows a further perspective view of the machining unit of figure 4A; and
figure 5 shows a block diagram of the automatic positioning method according to the present invention.

In the various figures, similar parts will be indicated with the same numerical references.

### Detailed description

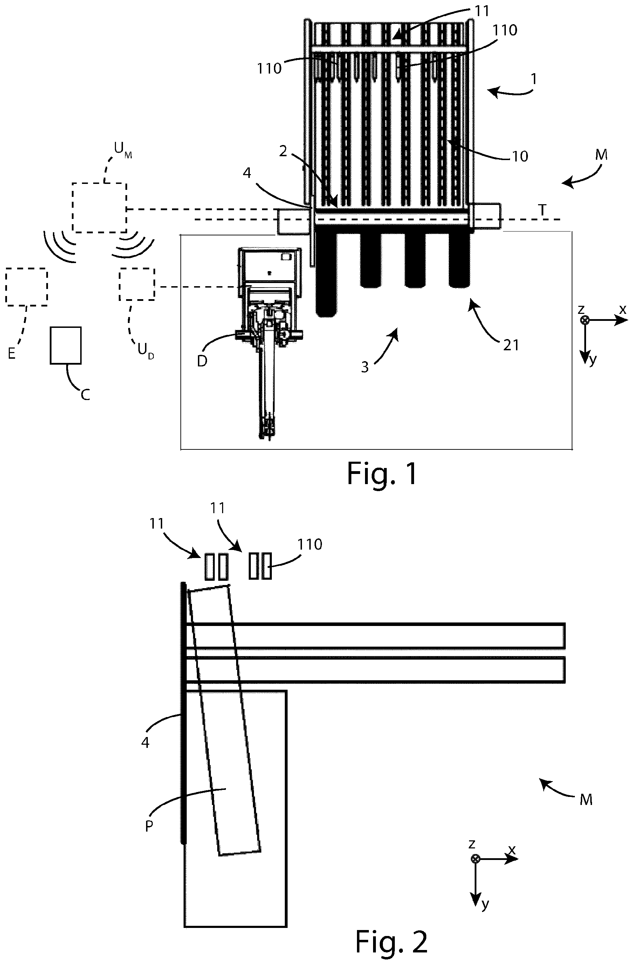

With reference to figure 1, the machine for machining pieces, such as panels P made of wood, ceramic, glass, fiberglass, plastic, metal and the like, globally indicated with the reference letter M, substantially comprises a first entry or loading station 1 of said panels P, a machining unit 2, for performing a respective machining on said panels P along a first axis X of a Cartesian reference system XYZ shown in figure 1, an entry/exit or loading/unloading station 3, a logic control unit U_{M}, in which machining programs to be performed on the panels P are stored, and a loading or handling device D comprising logic control unit U_{D} connected to said logic control unit U_{M}.

In said loading/unloading station 3 there is at least one resting or loading/unloading plane 21, for housing the panels P to be machined or machined, which develops along a second axis Y, orthogonal to said first axis X.

In the embodiment that is described, the machine M is a cutting machine, wherein the loading and/or unloading step of the panel P is performed automatically, by means of a loading device or robot D. However, the machine M can be a machine of a different type, without thereby departing from the scope of protection of the present invention.

Said loading device or robot D is capable of resting the panels P, which have to be subjected to machining, on said at least one resting or loading/unloading plane 21.

In the present embodiment, said loading device D is an anthropomorphic or Cartesian robot. However, in other embodiments, the type of said loading device D can be different from what has been described.

Said machine M comprises one or more pusher groups 11, each of which comprises one or more clamping and pushing elements 110, such as, for example, clamps 110 for clamping and moving the panel P to be machined, along a direction of advancement parallel to said second axis Y, until reaching the machining unit 2.

In the embodiment described, the machine M comprises a pusher group 11, including a plurality of clamping and pushing elements 110. The number of pusher groups and the number of clamping and pushing elements 110 may be different from what has been described, without thereby departing from the scope of protection of the present invention.

In particular, said pusher group 11 develops according to said first axis X that is movable along said second axis Y. Furthermore, said pusher group 11 can be operated by a respective electric, pneumatic or similar actuator (not shown in the figures).

Each clamping and pushing element 110 is movable along a third axis Z, orthogonal to said first axis X and to said second axis Y.

More specifically, each clamping and pushing element 110, included in said pusher group 11, is capable of passing from an open configuration, in which said clamping and pushing element 110 does not clamp the panel P, to a closed configuration, in which said clamping and pushing element 110 clamps the panel P for moving it in a supporting plane 10 away from and approaching a cutting line T, which will be better described later.

Furthermore, each clamping and pushing element 110 is equipped with a central body or base (not shown in the figures), which connects a first and a second clamping element (not shown in the figures), so that, when the clamping and pushing element 110 is in said open configuration, said panel P can contact the bottom of the clamping and pushing element 110 and rest on it.

In a further embodiment of the present invention, said machine M comprises one or more clamping and pushing elements 110 separated from said pusher group 11 and movable along said second axis Y.

The machining unit 2 develops according to said first axis X and substantially performs cuts on the panels P along a cutting line T parallel or substantially parallel to said first axis X.

In the embodiment described there is a machining unit 2. However, in other embodiments, there can be two or more machining units 2.

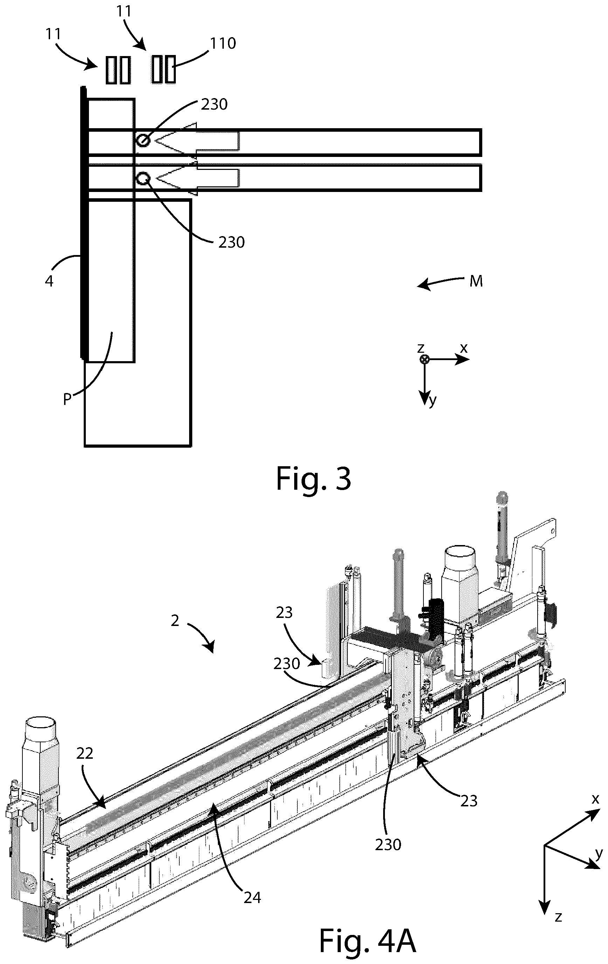

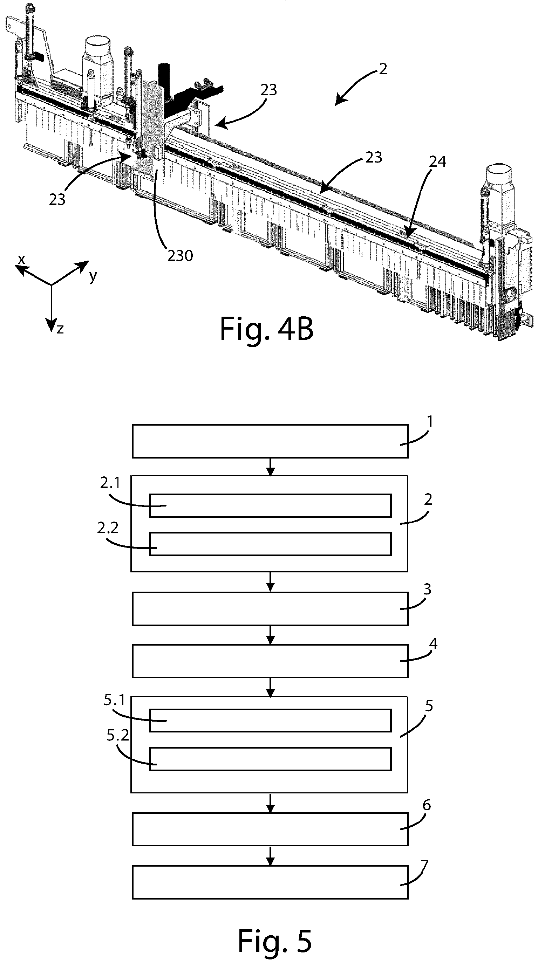

As can be seen from figures 4A and 4B, the machining unit 2 comprises a blocking member, such as a pressing member 22 and the like, arranged above said at least one resting plane 21.

More in detail, said pressing member 22 extends along said first axis X and is movable along said third axis Z, vertical and orthogonal with respect to said first axis X, between a resting position, in which said pressing member 22 is raised with respect to said resting plane 21, and a working position, in which said pressing member 22 is approaching with respect to said resting plane 21, in such a way as to block the panels P to be machined between said resting plane 21 and the same pressing member 22.

Said machine M comprises a reference or abutting element 4, which develops according to said second axis Y between said first loading station 1 and said loading/unloading station 3, towards which said panels P are brought closer for being positioned in a reference position.

Furthermore, said machining unit 2 comprises two approaching or coming members 23, such as approachers 23 or the like, capable of approaching, in use, the panel P closer to the reference element 4.

Said two approaching member 23 are arranged on said pressing member 22.

In particular, each approaching member 23 slides along a respective sliding guide 24 obtained on one side of said pressing member 22.

However, in other embodiments of the present invention, the number and arrangement of said approaching members 23 may be different from the one described.

In particular, said approaching members 23 are movable along said third axis Z, or along a perpendicular or substantially perpendicular direction to said resting plane 21, and along said first axis X, or along a perpendicular or substantially perpendicular direction to said stop 4.

More in detail, said approaching members 23 are movable among a resting position, in which said approaching members 23 are raised with respect to said resting plane 21, an intermediate position, in which said approaching members 23 are resting on said resting plane 21 and do not contact said panel P, and a working position, in which said approaching members 23 move the panel P to be machined along said first axis X, in such a way as to bring said panel P close to said stop 4, carrying out a pressure force on said panel P.

Said approaching members 23 comprise respective rollers 230 capable of contacting, in use, an edge of the panel P, which is intended to approach to the stop 4.

Said approaching members 23 can be operated by means of a respective electric, pneumatic or similar actuator (not shown).

Furthermore, the machining unit 2 comprises a cutting unit, which, in turn, comprises a machining tool (not shown in the figures) for machining said panels P arranged on said resting plane 21.

In the present embodiment, machining tool is a circular blade. However, in other embodiments, the machining tool may be different from what is described.

In particular, the cut takes place thanks to the displacement of said cutting unit along the cutting line T. Furthermore, the machining tool is vertically movable between a resting position, in which it is arranged below the resting plane 21, laterally one end of said cutting line T, and a working position, in which it is arranged at least partially protruding with respect to said resting plane 21.

More specifically, the circular blade lies on a plane XZ defined by the first axis X and by the third axis Z, protruding from said resting plane 21, in its working position, through a slot (not shown in the figures) for a given portion, so as to cut each panel P along the cutting line T.

Furthermore, the circular blade is rotatable about a rotation axis, orthogonal to said XZ plane and, therefore, parallel to said second axis Y, in its turn orthogonal to said first X and third Z axis.

The machining unit 2 comprises movement means (not shown in the figures) capable of rotating said circular blade around its own rotation axis.

The loading device D is essentially a mechanical arm or a two or more axes robot.

In particular, said logic control unit U_{D}, included in the loading device D, is capable of exchanging data with said logic control unit U_{M} of said machine M.

Otherwise, said machine M can comprise said logic control unit U_{M} of said machine M, and logic control unit U_{D} of said load device D can be connectable to mobile electronic devices E and/or to a cloud C, such as a server.

By mobile electronic device E is meant any electronic device E, such as a smartphone, tablet, laptop or the like.

Therefore, said logic control unit U_{M} of said machine M and/or said logic control unit U_{D} of said loading device D can be configured to send operating data of said machine M and/or of said loading device D to said mobile electronic device E.

Furthermore, said logic control unit U_{M} of said machine M and/or said logic control unit U_{D} of said loading device D can be configured to send said operating data of said machine M and/or of said loading device D also to a cloud server, and the latter can be configured to send said data to said mobile electronic devices E.

The operation of the machine for machining pieces according to the method for automatic positioning of a piece in the entry station of a machine, object of the present invention, is as follows.

With reference to the block diagram of figure 5, initially, in the positioning step 1, when it is intended to perform a machining on at least one panel P, the automatic loading device D, such as a *robot*, arranges the panel P or a pack of panels P stacked to be machined in said loading/unloading station 3, on said resting plane 21.

Subsequently, in the approaching or coming step 2, the approaching members 23 approach the panel P to the stop 4.

More specifically, in the lowering step 2.1, the approaching members 23 move along said third axis Z between the resting position, in which said approaching members 23 are raised with respect to said resting plane 21 and the intermediate position, in which said approaching members 23 are in resting on said resting plane 21 and do not contact said panel P.

Subsequently, in the displacement step 2.2, said approaching members 23 move along said first axis X between the intermediate position and the working position, in which said approaching members 23 move the panel P to be machined in such a way as to approach said panel P to said abutting element 4, applying a pressure force on the panel P in a direction orthogonal to the stop 4.

Subsequently, in the advancement step 3, said crossbar 12 is moved towards one end of the panel P, in such a way that said clamping and pushing elements 110 of said pusher group 11, in open configuration, contact said end of said panel P.

Then, in the clamping step 4, said clamping and pushing elements 110 of said pusher group 11 pass from said open configuration to said closed configuration, grasping and blocking said end of said panel P.

Subsequently, in the moving or deviating step 5, the approaching members 23 move away from the panel P.

More in detail, in the moving back step 5.1, said approaching members 23 move along said first axis X between the working position and the intermediate position, in which said approaching members 23 are lowered with respect to said resting plane 21 and do not contact said panel P.

Later, in the lifting step 5.2, the approaching members 23 move along said third axis Z between the intermediate position and the resting position, in which said approaching members 23 are raised with respect to said resting plane 21.

Finally, in the moving step 6, the panel P is moved or held, by said clamping and pushing elements 110, towards the machining unit 2, so that the machining on the panel P is carried out.

In the case of loading two or more panels P, the operating steps of the method remain unchanged, excepting that, after the approach of the first panel P to the reference element 4 of the machine M, the approach of the second panel P is carried out with respect to the edge of the first panel P, i.e., the edge of the first panel P constitutes the reference element for the second panel P, and so on for the subsequent panels P.

### Advantages

A first advantage of the method for automatic positioning, according to the present invention, is that of allowing the correct positioning of the piece by a robot or the like.

A further advantage of the method for automatic positioning, according to the present invention, is to minimize or avoid any delays in the subsequent machining steps of the same piece to be machined.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Method for automatic positioning of at least one panel (P) in the entry/exit station (3) of a machine (M) for machining panels (P) in wood, ceramic, glass, fiberglass, plastic, metal and the like, of the type comprising
at least one loading device (D) of said at least one or more panels (P);
wherein said entry/exit station (3) comprises at least one resting plane (21), which extends along a second axis (Y), on which said at least one loading device (D) places said at least one or more panels (P) to be machined;
at least one machining unit (2) to perform a machining on said at least one or more panels (P), wherein said at least one machining unit (2) extends along a first axis (X), orthogonal to said second axis (Y), and comprises at least one machine tool movable along a cutting line (T) to perform a machining on said at least one or more panels (P) and at least one approaching member (23) movable along said first axis (X) and capable of contacting said at least one or more panels (P); and
an abutting element (4), which extends along said second axis (Y);
said method being **characterized in that** it comprises the following steps:
1. positioning, by said at least one loading device (D), said at least one or more panels (P) on said at least one resting plane (21); and
2. juxtaposing, by said at least one approaching member (23), said at least one or more panels (P) to said abutting element (4), in such a way to position said at least one or more panels (P) in a reference position.

2. Method according to the preceding claim, **characterized in that** said machine (M) also comprises
at least one pusher group (11);
wherein said at least one pusher group (11) comprises one or more clamping and pushing elements (110) to clamp and move along the direction of said second axis (Y) said at least one or more panels (P), on a supporting plane (10) towards and away from said cutting line (T), and
wherein each clamping and pushing element (110) is capable of passing from an open configuration, in which each clamping and pushing element (110) does not clamp said at least one or more panels (P), to a closed configuration, in which each clamping and pushing element (110) clamps and holds said at least one or more panels (P) to move it;
said method being **characterized in that** it comprises, after said approaching step 2., the following further step:
3. moving said pusher group (11) towards one extremity of said at least one or more panels (P) in such a way that each clamping and pushing element (110) of said pusher group (11), contacts said at least one or more panels (P) in said open configuration.

3. Method according to the preceding claim, **characterized in that** it comprises, after said moving step 3., the following further steps:
4. moving each clamping and pushing element (110) of said pusher group (11) from said open configuration to said closed configuration;
5. moving said at least one approaching member (23) away from said at least one or more panels (P); and
6. moving or holding said at least one panel (P) towards/in said machining unit (2), by said each clamping and pushing element (110).

4. Method according to anyone of the preceding claims, wherein said resting plane (21) is a loading/unloading plane and, during the machining, said at least one or more panels (P) is resting partially on said resting plane (21),
said method being **characterized in that** said approaching step 2. comprises the following sub-step:
2.1 lowering said at least one approaching member (23) along a third axis (Z) vertical and orthogonal to said first axis (X), from a resting position, in which said at least one approaching member (23) is lifted with respect to said resting plane (21), to an intermediate position, in which said at least one approaching member (23) is lowered with respect to said resting plane (21) and does not contact said at least one or more panels (P).

5. Method according to the preceding claim, **characterized in that** said approaching step 2. comprises, after the lowering sub-step 2.1, the following sub-step:
2.2 moving said at least one approaching member (23) along said first axis (X) from said intermediate position to a working position, in which said at least one approaching member (23) moves said at least one or more panels (P) to be machined, in such a way to juxtapose said at least one or more panels (P) to said abutting element (4).

6. Method according to anyone of claims 3-5, **characterized in that** said moving away step 5. comprises the following sub-step:
5.1 moving back said at least one approaching member (23) along said first axis (X) from said working position to said intermediate position, wherein said at least one approaching member (23) is resting on said resting plane (21) and does not contact said at least one or more panels (P).

7. Method according to the preceding claims, **characterized in that** said moving away step 5. comprises, after said moving back sub-step 5.1, the following sub-step:
5.2 lifting said at least one approaching member (23) along said third axis (Z) from said intermediate position to said resting position, wherein said at least one approaching member (23) is lifted with respect to said resting plane (21).

8. Method according to anyone of the preceding claims, **characterized in that**, in said approaching step 2., one or more panels (P) are juxtaposed, by said at least one approaching member (23), to said first juxtaposed panel (P), in such a way to place said one or more panels (P) next to each other, in predetermined reference positions with respect to said first juxtaposed panel (P).

9. Method according to anyone of the claims 3-8, **characterized in that** it comprises, after said moving step 6., the following further step:
7. exchanging working data of said machine (M) with one or more mobile electronic devices (E) and/or a cloud infrastructure (C).

10. Method according to anyone of the preceding claims, **characterized in that** said positioning step 1. of said at least one or more panels (P) on said supporting plane (10) is performed by an anthropomorphic or cartesian robot (D).
